# EUROPÄISCHE PATENTSCHRIFT

(11) **EP 2 878 726 B1**
(45) Veröffentlichungstag und Bekanntmachung des Hinweises auf die Patenterteilung: **09.01.2019**
(21) Anmeldenummer: 14194941.2
(22) Anmeldetag: 26.11.2014
(51) Int. Cl.: D06F 39/00, D06F 39/10, D06F 35/00

(54) **Wasserführendes Haushaltsgerät mit einer Aufbereitung von gespeichertem Grauwasser**
Water-conducting domestic appliance comprising the treatment of stored grey water
Appareil ménager aquifère doté d'un conditionnement d'eau grise accumulée

(30) Priorität: 29.11.2013 DE 102013224523
(43) Veröffentlichungstag der Anmeldung: 03.06.2015
(73) Patentinhaber: BSH Hausgeräte GmbH, 81739 München (DE)
(72) Erfinder: Barrado Franco, Antonio, 10317 Berlin (DE); Bischof, Andreas, Dr., 10407 Berlin (DE); Schaub, Hartmut, 14656 Brieselang (DE)

(56) Entgegenhaltungen:
- EP-A2- 0 771 898
- DE-A1-102011 086 137
- US-A- 5 868 937

## Beschreibung

Die Erfindung betrifft ein wasserführendes Haushaltsgerät zur Reinigung von Waschgut mit einem Behandlungsraum zur Aufnahme des Waschgutes, einem Speicherbehälter zur Speicherung von Grauwasser, einer Aufbereitungseinrichtung zur Aufbereitung des in dem Speicherbehälter gespeicherten Grauwassers und einer Fördereinrichtung zur Förderung des Grauwassers von dem Speicherbehälter durch die Aufbereitungseinrichtung hindurch, wobei die Aufbereitungseinrichtung derart zwischen dem Speicherbehälter und dem Behandlungsraum angeordnet ist, dass sie mit dem Behandlungsraum über ein erstes Zufuhrsystem und mit dem Speicherbehälter über ein zweites Zufuhrsystem flüssigkeitsleitend verbunden ist, und ein Verfahren zum Betreiben eines solchen wasserführenden Haushaltsgerätes.

In wasserführenden Haushaltsgeräten werden im Allgemeinen Gegenstände, die auf unterschiedliche Weise verunreinigt sind, gereinigt. So ist in Geschirrspülmaschinen Geschirr von Essensreste und in Waschmaschinen Wäsche von Flecken, Schweiß, Mikroorganismen und anderem zu reinigen. Allen wasserführenden Haushaltsgeräten ist gemeinsam, dass sich in der feuchtwarmen Atmosphäre Biofilme bilden können, die aus organischen Substanzen wie Mikroorganismen und Nährstoffen bestehen. Insbesondere bei einem wasserführenden Haushaltsgerät mit einem Speicherbehälter, der dazu dient, das Grauwasser, das im Wasch- oder Spülprozess anfällt, zu speichern, um es in einem späteren Wasch- oder Spülgang wieder zu verwenden, kann es zur Bildung von Biofilmen in dem Speicherbehälter kommen.

Dokument EP 2 314 753 A1 beschreibt ein Verfahren zur Durchführung eines Spülgangs während eines Waschprozesses in einer Waschmaschine, bei dem im Spülgang das Wasser über einen Umwälzkreis umgepumpt wird. Dabei wird das Wasser im Umwälzkreis außerhalb des Waschbehälters mit ultraviolettem Licht bestrahlt, um auch bei niedrigen Waschtemperaturen und ohne den Einsatz von Bleichmitteln eine Hygienewirkung zu erzielen. Im letzten Spülgang dieses Verfahrens erfolgt die Zugabe von Weichspüler bevorzugt erst nachdem bereits eine gewisse Zeit ohne Weichspüler gespült und das Wasser dabei umgepumpt wurde, da der Weichspüler eine Trübung des Spülwassers verursacht, welche die Wirkung der UV-Bestrahlung und damit den Hygieneeffekt herabsetzt.

Aus dem US-Patent 5,868,937 sind ein Verfahren und eine Vorrichtung zum Aufbereiten und Wiederverwenden von Abwasser bekannt. Bei der somit bekannten Vorrichtung ist eine Umwälzpumpe vorgesehen, die über ein Filterelement mit hoher Kapazität Abwasser in einen Zwischenbehälter fördert. Aus dem Zwischenbehälter kann das Abwasser zurück in eine Wäschetrommel oder dergleichen gepumpt oder abgepumpt werden. Ferner ist eine zusätzliche Filtereinrichtung vorgesehen, aus der Wasser aus dem Zwischenbehälter gefiltert werden kann.

Die DE 197 09 085 A1 offenbart ein Verfahren zum Waschen von Wäsche, bei dem das Waschwasser in einem Zwischenbehälter aufgefangen, gefiltert und in einem Speicher gesammelt wird.

In Dokument DE 10 2011 086 137 A1 ist eine Waschmaschine mit einem Laugenbehälter, einer Wäschetrommel, einem Wasserzulaufsystem, einer Laugenpumpe, einer Programmsteuerung und mindestens einer Filtrationsvorrichtung bekannt, wobei die Filtrationsvorrichtung zwischen dem Laugenbehälter und einer Zuleitung zum Laugenbehälter angeordnet ist und die Waschmaschine so ausgestaltet ist, dass eine im Laugenbehälter vorhandene wässrige Flüssigkeit mindestens zeitweise während eines Wäschebehandlungsschritts durch Durchleiten durch die Filtrationsvorrichtung filtriert und wieder dem Laugenbehälter zugeführt werden kann.

Aufgabe der vorliegenden Erfindung ist es, ein verbessertes wasserführendes Haushaltsgerät mit einem integrierten Speicherbehälter zur Speicherung von Grauwasser und einer Einrichtung zur Aufbereitung des in dem Speicherbehälter gespeicherten Grauwassers bereitzustellen.

Die Lösung dieser Aufgabe wird durch ein wasserführendes Haushaltsgerät mit den Merkmalen von Anspruch 1 und ein Verfahren zum Betreiben eines solchen wasserführenden Haushaltsgerätes mit den Merkmalen von Anspruch 29 erreicht. Bevorzugte Ausführungsformen des erfindungsgemäßen Haushaltsgerätes sind in den entsprechenden abhängigen Patentansprüchen aufgeführt.

Gegenstand der Erfindung ist somit ein wasserführendes Haushaltsgerät zur Reinigung von Waschgut mit einem Behandlungsraum zur Aufnahme des Waschgutes, einem Speicherbehälter zur Speicherung von Grauwasser, einer Aufbereitungseinrichtung zur Aufbereitung des in dem Speicherbehälter gespeicherten Grauwassers und einer Fördereinrichtung zur Förderung des Grauwassers von dem Speicherbehälter durch die Aufbereitungseinrichtung hindurch, wobei die Aufbereitungseinrichtung derart zwischen dem Speicherbehälter und dem Behandlungsraum angeordnet ist, dass sie mit dem Behandlungsraum über ein erstes Zufuhrsystem und mit dem Speicherbehälter über ein zweites Zufuhrsystem flüssigkeitsleitend verbunden ist. Bei diesem wasserführenden Haushaltsgerät umfasst erfindungsgemäß das erste Zufuhrsystem oberhalb der Aufbereitungseinrichtung ein erstes Aufnahmevolumen, das bei Betrieb der Fördereinrichtung durch eine über der Aufbereitungseinrichtung stehende Wassersäule gefüllt ist, und das zweite Zufuhrsystem und/oder der Speicherbehälter unterhalb der Aufbereitungseinrichtung ein zweites Aufnahmevolumen, das mindestens dem ersten Aufnahmevolumen entspricht und das zur Aufnahme eines der Wassersäule entsprechenden Flüssigkeitsvolumens bei abgeschalteter Fördereinrichtung ausgebildet ist. Nach Abschalten der Fördereinrichtung ist ein Zurückströmen des in der Wassersäule stehenden Volumens an aufbereiteten Grauwassers zur Reinigung der Aufbereitungseinrichtung von angelagerten Schwebstoffen durch die Aufbereitungseinrichtung ermöglicht. Desweiteren ist Gegenstand der Erfindung ein Verfahren zum Betreiben eines derartigen wasserführenden Haushaltsgerätes, bei dem das in dem Speicherbehälter gespeicherte Grauwasser zur Aufbereitung bei eingeschalteter Fördereinrichtung zu der Aufbereitungseinrichtung befördert wird, und bei dem nach Abschalten der Fördereinrichtung das in der Wassersäule stehende Volumen an aufbereiteten Grauwassers zur Reinigung der Aufbereitungseinrichtung von angelagerten Schwebstoffen durch die Aufbereitungseinrichtung zurückströmt.

Unter einem wasserführenden Haushaltsgerät wird ein Gerät verstanden, das zur Haushaltsführung eingesetzt wird, und bei dessen Betrieb Wasser verwendet wird. Insbesondere handelt es sich bei dem wasserführenden Haushaltsgerät um ein Haushaltsgroßgerät der sogenannten "Weißen Ware", wie beispielsweise eine Waschmaschine, einen Waschtrockner oder einen Geschirrspüler. Unter wasserführendem Haushaltsgerät mit einem Speicherbehälter wird ein Haushaltsgerät verstanden, bei dem der Speicherbehälter Teil des Haushaltsgerätes ist. Beispielsweise ist bei einem Haushaltsgerät, das ein Gehäuse aufweist, der Speicherbehälter innerhalb des Gehäuses angeordnet. Der Speicherbehälter kann auch Teil des Gehäuses sein. Es ist auch möglich, dass der Speicherbehälter außen an dem Gehäuse angeordnet und fest mit dem Gehäuse verbunden ist. Unter wasserführendem Haushaltsgerät mit einem Speicherbehälter wird jedenfalls keine gewerbliche Reinigungsanlage verstanden, die einen separat aufgestellten Speicherbehälter aufweist.

Unter dem Begriff "Grauwasser" wird ein gering verschmutztes Abwasser verstanden, wie es etwa im Wasch- oder Spülprozess einer Waschmaschine oder eines Geschirrspülers anfällt. Dieses Grauwasser kann zur Aufbereitung zu Brauch- bzw. Betriebswasser dienen. Insbesondere kann Grauwasser durch den Einsatz von Wasserrecycling-Systemen für eine Zweitnutzung aufbereitet werden. Für eine Verwendung in einem späteren Wasch- oder Spülgang eines Haushaltsgerätes sollte das durch Aufbereitung von Grauwasser erzeugte Klarwasser hygienisch sauber sein.

Das erfindungsgemäße wasserführende Haushaltsgerät sowie das entsprechende Verfahren zum Betreiben des wasserführenden Haushaltsgerätes weist den Vorteil auf, dass die Aufbereitungseinrichtung von Ablagerungen, wie beispielsweise Flusen oder anderen Schwebstoffen, nach Abschalten der Fördereinrichtung automatisch durch das aufgrund der Schwerkraft zurückströmende Grauwasser gereinigt wird. Auf diese Weise kann die Aufbereitungseinrichtung betrieben werden, ohne dass es zu Störungen aufgrund von Verschmutzungen innerhalb der Aufbereitungseinrichtung kommt. Damit können Wartungen der Aufbereitungseinrichtung vermieden werden, wodurch sich die Kundenfreundlichkeit des wasserführenden Haushaltsgerätes deutlich verbessert.

Insbesondere wird die Fördereinrichtung mindestens solange betrieben, bis das zweite Zufuhrsystem und/oder der Speicherbehälter soweit entleert sind, dass unterhalb der Aufbereitungseinrichtung das zweite Aufnahmevolumen zur Aufnahme von zurückströmenden Grauwasser aus dem ersten Aufnahmevolumen vollständig zur Verfügung steht. Auf diese Weise wird gewährleistet, dass das Grauwasser der gesamten Wassersäule bei abgeschalteter Fördereinrichtung durch die Aufbereitungseinrichtung zurückfließen kann, wodurch die Reinigungswirkung maximal ist. Diese vollständige Entleerung des zweiten Aufnahmevolumens wird zumindest in regelmäßigen Abständen durchgeführt. Dadurch kann in regelmäßigen Abständen die maximale Reinigungswirkung der Wassersäule genutzt werden.

Vorzugsweise ist die Aufbereitungseinrichtung in ihrer Höhenposition innerhalb des wasserführenden Haushaltsgerätes derart zwischen dem Speicherbehälter und dem Behandlungsraum angeordnet, dass das erste Aufnahmevolumen und damit die Wassersäule maximal ist. Insbesondere ist das erste Zufuhrsystem innerhalb des wasserführenden Haushaltsgerätes derart zwischen der Aufbereitungseinrichtung und dem Behandlungsraum angeordnet, dass das erste Aufnahmevolumen und damit die Wassersäule maximal ist. Je mehr Grauwasser für die Rückspülung zur Verfügung steht, desto besser ist die Reinigungswirkung, um Ablagerungen aus der Aufbereitungseinrichtung zu beseitigen. Auch eine hohe Durchflussgeschwindigkeit des Grauwassers bei der Rückspülung bzw. ein hoher hydrostatischer Druck der Wassersäule hat einen positiven Effekt auf die Reinigungswirkung. Eine an die räumlichen Bedingungen innerhalb des wasserführenden Haushaltsgerätes angepasste, maximale Wassersäule hat somit den Vorteil, dass die Reinigungswirkung des Grauwassers bei der Rückspülung durch die Aufbereitungseinrichtung maximal ist.

Gemäß einer bevorzugten Ausführungsform ist die Aufbereitungseinrichtung in ihrer Höhenposition innerhalb des wasserführenden Haushaltsgerätes derart zwischen dem Speicherbehälter und dem Behandlungsraum angeordnet, dass das zweite Aufnahmevolumen minimal ist. Insbesondere ist das zweite Zufuhrsystem innerhalb des wasserführenden Haushaltsgerätes derart zwischen der Aufbereitungseinrichtung und dem Speicherbehälter angeordnet ist, dass das zweite Aufnahmevolumen minimal ist. Das zweite Aufnahmevolumen ist genau dann minimal, wenn es dem ersten Aufnahmevolumen entspricht. Da das zweite Aufnahmevolumen unterhalb der Aufbereitungseinrichtung angeordnet ist, hat ein minimales zweites Aufnahmevolumen den Vorteil, dass die Aufbereitungseinrichtung in ihrer Höhenposition direkt oberhalb dieses minimalen zweiten Aufnahmevolumens angeordnet sein kann. Auf diese Weise kann der Bauraum innerhalb des wasserführenden Haushaltsgerätes für eine maximale Wassersäule oberhalb der Aufbereitungseinrichtung besonders gut genutzt werden.

Das zweite Aufnahmevolumen wird durch die Abmessungen in alle drei Raumrichtungen bestimmt, die das zweite Zufuhrsystem und/oder der Speicherbehälter unterhalb der Aufbereitungseinrichtung aufweisen. Insbesondere ist die Höhenausdehnung des zweiten Aufnahmevolumens minimal. Das bedeutet, dass das zweite Zufuhrsystem und/oder der Speicherbehälter derart ausgebildet sind, dass der zur Verfügung stehende Bauraum in den beiden Raumrichtungen senkrecht zur Höhenausdehnung zur Ausbildung des zweiten Aufnahmevolumens soweit wie möglich genutzt wird. Dieser Bauraum kann durch Randbedingungen begrenzt sein, wie beispielsweise eine effiziente Fertigungstechnik.

Gemäß einer bevorzugten Ausführungsform sind das erste Zufuhrsystem, die Aufbereitungseinrichtung, der Speicherbehälter und/oder das zweite Zufuhrsystem derart zueinander angeordnet, dass bei Abschalten der Fördereinrichtung ein vollständiges Zurücklaufen der Wassersäule durch die Aufbereitungseinrichtung hindurch gewährleistet ist. Dies hat den Vorteil, dass die Reinigungswirkung durch das in dem ersten Aufnahmevolumen zur Verfügung stehende Grauwasser vollständig genutzt werden kann, da kein Grauwasser in dem ersten Aufnahmevolumen nach Abschalten der Fördereinrichtung zurückbleibt.

Vorzugsweise ist eine Belüftung des ersten Zufuhrsystems vorgesehen. Das erste Zufuhrsystem kann zur Belüftung beispielsweise ein Belüftungsventil und/oder eine Belüftungsleitung zu dem Speicherbehälter umfassen. Durch die Belüftung des ersten Zufuhrsystems wird gewährleistet, dass die Wassersäule bei abgeschalteter Fördereinrichtung tatsächlich durch die Aufbereitungseinrichtung zurückfließt und nicht etwa durch einen Unterdruck in dem ersten Aufnahmevolumen stehen bleibt. Insbesondere ist die Belüftung an einem Scheitelpunkt des ersten Zufuhrsystems vorgesehen. Dadurch kann bei abgeschalteter Fördereinrichtung eine Saugheberwirkung innerhalb des ersten Zufuhrsystems vermieden werden.

Gemäß einer Ausführungsform der Erfindung ist eine Rückführverbindung zum Zurückführen von gereinigtem Grauwasser von dem ersten Zufuhrsystem zu dem Speicherbehälter vorgesehen. Das von der Aufbereitungseinrichtung aufbereitete Grauwasser kann somit in den Speicherbehälter zurückgeführt werden. Damit ist es möglich das Grauwasser auch zu einem Zeitpunkt aufzubereiten, wenn es nicht direkt benötigt wird. Auf diese Weise kann ein Programmablauf des wasserführenden Haushaltsgerätes verkürzt werden, da die Aufbereitung des Grauwassers nicht extra abgewartet werden muss.

Insbesondere zweigt die Rückführverbindung oberhalb des ersten Aufnahmevolumens von dem ersten Zufuhrsystem ab, so dass auch bei Zurückführung von gereinigtem Grauwasser in den Speicherbehälter das erste Aufnahmevolumen durch die Wassersäule gefüllt ist. Auf diese Weise kann auch bei Zurückführung von gereinigtem Grauwasser in den Speicherbehälter eine Spülung der Aufbereitungseinrichtung mit dem Grauwasser der Wassersäule bei abgeschalteter Fördereinrichtung erfolgen. Je nachdem, wie weit der Speicherbehälter zum Zeitpunkt der Abschaltung der Fördereinrichtung gefüllt ist, kann die gesamte Wassersäule oder nur ein Teil von ihr durch die Aufbereitungseinrichtung zurückfließen. Insbesondere weist der Speicherbehälter einen maximalen Füllstand auf. Ist die Aufbereitungseinrichtung oberhalb des maximalen Füllstands des Speicherbehälters angeordnet, so dass bei Abschaltung der Fördereinrichtung die gesamte Wassersäule durch die Aufbereitungseinrichtung zurückfließen kann.

Gemäß einer Ausführungsform der Erfindung setzt sich das erste Zufuhrsystem aus einem Bereich des ersten Aufnahmevolumens und einem weiteren Bereich zusammen, wobei das erste Zufuhrsystem zumindest in dem Bereich des ersten Aufnahmevolumens einen Leitungsdurchmesser aufweist, der an einen Durchflussbereich der Aufbereitungseinrichtung angepasst ist. Auf diese Weise kann sichergestellt werden, dass der gesamte Durchflussbereich der Aufbereitungseinrichtung durch das zurückströmende Grauwasser der in dem ersten Aufnahmebereich stehenden Wassersäule gereinigt wird.

Insbesondere weist das erste Zufuhrsystem in dem Bereich des ersten Aufnahmevolumens einen größeren Leitungsdurchmesser auf als in dem weiteren Bereich. Durch solch einen größeren Leitungsdurchmesser im Bereich des ersten Aufnahmevolumens kann die Grauwassermenge, die die Wassersäule bildet, vergrößert werden, wodurch die Reinigungswirkung verbessert wird.

Gemäß einer bevorzugten Ausführungsform ist ein Filter zur Filterung von Schwebstoffen aus dem Grauwasser vorgesehen. Der Filter kann ein Teil der Aufbereitungseinrichtung sein oder als separates Bauteil zwischen dem Speicherbehälter und der Aufbereitungseinrichtung angeordnet sein. Insbesondere umfasst die Aufbereitungseinrichtung eine Desinfektionseinheit, durch die Mikroorganismen in dem Grauwasser abgetötet werden, und der Filter ist in Hauptflussrichtung vor dieser Desinfektionseinheit angeordnet. Durch den Filter wird der Anteil an Schwebstoffen in dem Grauwasser reduziert. Somit werden durch den Filter Anlagerungen von derartigen Schwebstoffen in Leitungen oder Bauteilen, die sich in Hauptflussrichtung hinter dem Filter befinden, reduziert. Unter Hauptflussrichtung wird hierbei die Richtung verstanden, in die das Grauwasser bei eingeschalteter Fördereinrichtung fließt. Da sich die Desinfektionseinheit in Hauptflussrichtung hinter dem Filter befindet, werden somit durch den Filter Anlagerungen von Schwebstoffen des Grauwassers in der Desinfektionseinheit reduziert. Dies führt zu einer Steigerung der Betriebssicherheit der Desinfektionseinheit.

In dem Fall, dass die Aufbereitungseinrichtung den Filter umfasst, kann der Filter insbesondere durch zumindest ein Funktionsteil der Aufbereitungseinrichtung gebildet sein. Dadurch kann die Aufbereitungseinrichtung kostengünstig mit dem Filter ausgestattet werden, da zusätzliche Bauteile vermieden werden. Das Funktionsteil kann auf diese Weise zwei Aufgaben erfüllen. Zum einen seine Funktion als Teil der Aufbereitungseinrichtung und zum anderen seine Funktion als Filter. Insbesondere ist das Funktionsteil ein Teil der Desinfektionseinheit, wie z.B. eine Elektrode. Solch eine Elektrode kann in Form eines Siebs ausgebildet sein und damit gleichzeitig als Filter fungieren.

Vorzugsweise ist der Filter als Sieb, insbesondere als Hutsieb, ausgebildet. Durch ein Sieb können auf besonders einfache und kostengünstige Weise Schwebstoffe, wie beispielsweise Flusen, aus dem Grauwasser beseitigt werden. Die Schwebstoffe lagern sich bei eingeschalteter Fördereinrichtung an dem Sieb an und werden bei ausgeschalteter Fördereinrichtung durch das zurückfließende Grauwasser des ersten Aufnahmevolumens in das zweite Aufnahmevolumen zurückgespült. Dadurch werden die Schwebstoffe in dem zweiten Aufnahmevolumen konzentriert.

Das Sieb kann in einem konischen Abschnitt, insbesondere konischen Rohrabschnitt, des zweiten Zufuhrsystems angeordnet sein. Dabei ist der konische Abschnitt derart angeordnet, dass er sich in Hauptflussrichtung erweitert. Vorzugsweise ist das Sieb an der engsten Stelle des konischen Abschnitts angeordnet. Auf diese Weise lagern sich die Schwebstoffe an dem Sieb und damit an der engsten Stelle des konischen Abschnitts an. Bei der Rückspülung der Wassersäule wird die Fließrichtung des Grauwassers von der Hauptflussrichtung in die Rückspülrichtung umgekehrt. In Rückspülrichtung verengt sich der konische Abschnitt bis zu der engsten Stelle, an der das Sieb angeordnet ist. Durch diese Verengung wird die Kraft des zurückfließenden Grauwassers auf die an dem Sieb angelagerten Schwebstoffe erhöht, wodurch die Schwebstoffe besonders gut von dem Sieb abgelöst werden.

Im Falle eines Hutsiebes weist das Hutsieb eine Bodenfläche, einen Befestigungsring und eine zwischen Bodenfläche und Befestigungsring verlaufende Mantelfläche auf. Insbesondere ist das Hutsieb derart in dem konischen Abschnitt angeordnet, dass die Bodenfläche an der engsten Stelle des konischen Abschnitts liegt und von der Strömung des Grauwassers senkrecht durchflossen wird. Der Befestigungsring des Hutsiebs ist an der weitesten Stelle des konischen Abschnitts mit dem zweiten Zufuhrsystem verbunden. Die Mantelfläche des Hutsiebs ist ebenfalls konisch ausgebildet und verläuft vorzugsweise parallel zu dem konischen Abschnitt des zweiten Zufuhrsystems. Damit liegt der Bereich des Hutsiebs, an dem sich die meisten Schwebstoffe anlagern, nämlich die Bodenfläche, in dem Bereich des konischen Abschnitts des zweiten Zufuhrsystems in dem die Kräfte des zurückfließenden Grauwassers auf das Hutsieb am größten sind. Dadurch werden die an dem Hutsieb angelagerten Schwebstoffe durch das zurückfließende Grauwassers besonders gut abgelöst. Zum anderen liegt der Bereich des Hutsiebs, mit dem das Hutsieb mit dem zweiten Zufuhrsystem verbunden ist, nämlich der Befestigungsring in einem Bereich des konischen Abschnitts des zweiten Zufuhrsystems in dem die Kräfte des zurückfließenden Grauwassers auf das Hutsieb am geringsten sind. Dadurch ist die Haltbarkeit der Befestigung des Hutsiebs in dem zweiten Zufuhrsystem besonders gut gewährleistet.

Gemäß einer bevorzugten Ausführungsform ist das zweite Zufuhrsystem und/oder der Speicherbehälter mit einem Abwassersystem zum Abführen von zumindest des in dem zweiten Aufnahmevolumen aufgenommen Flüssigkeitsvolumens verbunden. Damit können die Schwebstoffe, die in dem Grauwasser des zweiten Aufnahmevolumens konzentriert werden, mit dem Grauwasser des zweiten Aufnahmevolumens über das Abwassersystem entsorgt werden.

Gemäß einer bevorzugten Ausführungsform ist dem Filter eine Zerkleinerungseinrichtung zur Zerkleinerung der aus dem Grauwasser herausgefilterten Schwebstoffe zugeordnet. Durch solch eine Zerkleinerungseinrichtung können die herausgefilterten Schwebstoffe soweit zerkleinert werden, bis sie den Filter passieren können. In diesem Fall kann der Filter derart ausgewählt sein, dass die zerkleinerten Schwebstoffe auch die in Hauptflussrichtung nach dem Filter angeordneten Leitungen und Bauteile passieren können, ohne sich an diesen anzulagern.

Vorzugsweise ist die Zerkleinerungseinrichtung derart ausgebildet, dass sie durch eine Strömung des Grauwassers, insbesondere in Hauptflussrichtung, in Gang gesetzt wird. Dadurch, dass die Zerkleinerungseinrichtung lediglich durch die Strömung des Grauwassers angetrieben wird, kann auf eine zusätzliche elektrische oder elektromagnetische Antriebseinrichtung für die Zerkleinerungseinrichtung verzichtet werden.

Gemäß einer bevorzugten Ausführungsform ist die Zerkleinerungseinrichtung ein Schwebkörper, insbesondere mit einer schneidenden Oberfläche, der durch die Strömung des Grauwassers in Rotation versetzt wird. Beispielsweise ist die schneidende Oberfläche eine gezahnte Oberfläche. Vorzugsweise weist der Schwebkörper an seiner Oberfläche Leitstrukturen auf, durch die die Strömung des Grauwassers ein Drehmoment erzeugt. Solch ein Schwebkörper ist besonders kostengünstig herstellbar. Durch die Leitstrukturen, die beispielsweise spiralförmig um den Schwebkörper herum angeordnet sind, kann auf einfache Weise ein Drehmoment durch das vorbeiströmende Grauwasser erzeugt werden.

Gemäß einer bevorzugten Ausführungsform umfasst der Filter ein Sieb, und der Schwebkörper ist derart ausgebildet, dass er durch die Strömung des Grauwassers mit seiner schneidenden Oberfläche gegen das Sieb gedrückt wird. Auf diese Weise kann auf eine Befestigung des Schwebkörpers verzichtet werden. Der Schwebkörper kann frei schwimmend in der Nähe des Siebs angeordnet sein und wird durch die Strömung des Grauwassers, insbesondere in Hauptflussrichtung, gegen das Sieb gedrückt. Durch die Rotation, in die der Schwebkörper durch die Strömung des Grauwassers versetzt wird, werden Schwebstoffe, die sich an dem Sieb angelagert haben, durch die nun rotierende, schneidende Oberfläche des Schwebkörpers abgeraspelt bzw. zerkleinert.

Vorzugsweise ist der Filter in einem im Wesentlichen senkrecht angeordneten Leitungsabschnitt des zweiten Zufuhrsystems angeordnet. Damit ist auch die Zerkleinerungseinrichtung in dem im Wesentlich senkrecht angeordneten Leitungsabschnitt des zweiten Zufuhrsystems angeordnet. Dies hat den Vorteil, dass eine Zerkleinerungswirkung der Zerkleinerungseinrichtung gleichmäßig über den Querschnitt des zweiten Zufuhrsystems bzw. des Filters verteilt ausgeübt werden kann.

Die vorstehend erläuterten und/oder in den Unteransprüchen wiedergegebenen vorteilhaften Aus- und Weiterbildungen der Erfindung können dabei - außer z.B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert. Es zeigen, jeweils in einer schematischen Darstellung:
- Fig. 1: vorliegend relevante Teile einer Ausführungsform eines erfindungsgemäßen wasserführenden Haushaltsgerätes in Form einer Waschmaschine,
- Fig. 2: einen abgewandelte Ausführungsform der Waschmaschine gemäß Figur 1 ohne eine Rückführverbindung in den Speicherbehälter,
- Fig. 3: einen abgewandelte Ausführungsform der Waschmaschine gemäß Figur 1 mit einer Rückführverbindung in den Speicherbehälter und mit einer Belüftungsleitung,
- Fig. 4: einen Filter in Form eines Hutsiebes,
- Fig. 5: einen Filter mit einer Zerkleinerungseinrichtung.

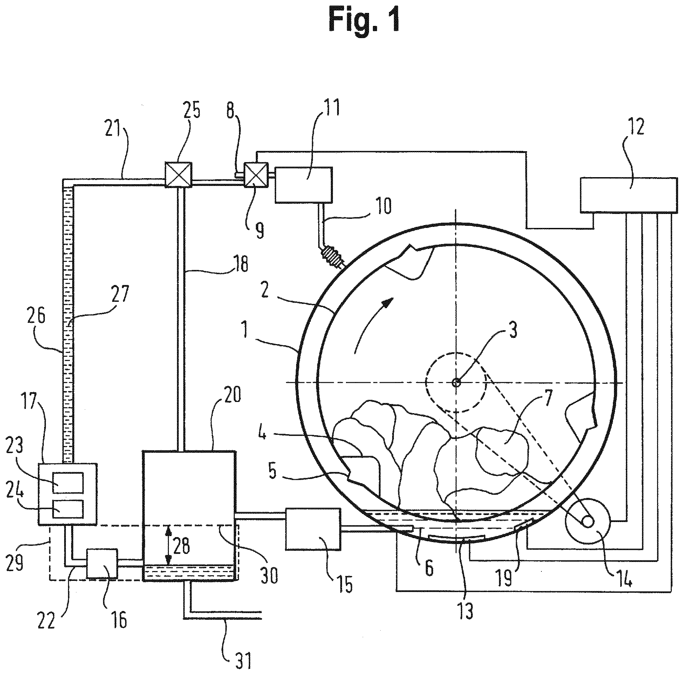

Figur 1 zeigt in einer schematischen Darstellung vorliegend relevante Teile einer Ausführungsform eines erfindungsgemäßen wasserführenden Haushaltsgerätes in Form einer Waschmaschine. Andere Ausführungsformen sind denkbar. Die Waschmaschine der in der Figur 1 gezeigten Ausführungsform weist als Behandlungsraum 1 einen Laugenbehälter auf, in dem eine Trommel 2 um eine Drehachse 3 drehbar gelagert und durch einen Antriebsmotor 14 angetrieben wird. Aus ergonomischen Gründen ist die Drehachse 3 der Trommel 2 aus der Horizontalen um einen kleinen Winkel (z.B. 13°) nach oben vorne gerichtet, so dass ein leichterer Zugang und Einblick in das Innere der Trommel 2 gegeben ist. Durch diese Anordnung wird im Zusammenwirken mit besonders geformten Wäschemitnehmern 4 und Schöpfeinrichtungen 5 für die Waschlauge 6 an der Innenfläche des Trommelmantels außerdem eine Intensivierung der Durchflutung der Wäsche 7 mit Waschlauge oder Spülflüssigkeit erzielt.

Die Waschmaschine weist zudem ein Wasserzulaufsystem auf, das eine Wasseranschlussarmatur für das Hauswassernetz 8, ein elektrisch steuerbares Ventil 9 und eine Zuleitung 10 zum Behandlungsraum 1 umfasst, die über eine Einspülschale 11 geführt ist, aus der die Zulaufflüssigkeit Waschmittelportionen in den Behandlungsraum 1 transportieren kann. Außerdem ist in dem Behandlungsraum 1 eine Heizeinrichtung 13 zur Erwärmung der in dem Behandlungsraum 1 befindlichen Flüssigkeit angeordnet. Weiterhin ist in einem unteren Bereich des Behandlungsraums 1 ein Sensor 19 zur Messung eines hydrostatischen Druckes in dem Behandlungsraum 1 vorgesehen, durch den insbesondere auch eine Beladung der Trommel 2 mit Wäsche 7 bestimmt werden kann.

Bei der in der Figur 1 gezeigten Ausführungsform weist die Waschmaschine einen Speicherbehälter 20 auf, in dem Grauwasser in Form von beim Spülen der Wäsche verwendetem Spülwasser aus verschiedenen Spülgängen gespeichert werden kann. Mit einer Pumpe 15 kann das im Behandlungsraum 1 bzw. der Trommel 2 befindliche Grauwasser in den Speicherbehälter 20 gepumpt werden. Von dem Speicherbehälter kann das Grauwasser mit Hilfe einer Fördereinrichtung 16, die insbesondere als weitere Pumpe ausgebildet sein kann, zu einer Aufbereitungseinrichtung 17 gefördert werden. Dazu sind der Speicherbehälter 20 und die Aufbereitungseinrichtung 17 über eine Verbindungsleitung 22 flüssigkeitsleitend miteinander verbunden. Die Fördereinrichtung 16 ist gemäß dem in Figur 1 gezeigten Ausführungsbeispiel im Bereich dieser Verbindungsleitung 22 angeordnet. Die Fördereinrichtung 16 kann aber auch in die Aufbereitungseinrichtung 17 integriert sein (nicht gezeigt). Eine Hauptflussrichtung 42 des Grauwassers wird durch die Richtung definiert, in die das Grauwasser bei ordnungsgemäßem Betrieb der Fördereinrichtung 16 fließt.

Mit der Aufbereitungseinrichtung 17 wird das Grauwasser aufbereitet. Dazu umfasst die Aufbereitungseinrichtung 17 in dem vorliegenden Ausführungsbeispiel zwei Komponenten. Mit einer Desinfektionseinheit 23 werden Mikroorganismen abgetötet. Mit einem Filter 24 werden Schwebstoffe, wie insbesondere Flusen; aus dem Grauwasser gefiltert. Der Filter 24 kann auch als separates Bauteil außerhalb der Aufbereitungseinrichtung 17 angeordnet sein (nicht gezeigt). In diesem Fall wäre der Filter 24 vorzugsweise in Hauptflussrichtung 42 vor der Aufbereitungseinrichtung 17 angeordnet, so dass lediglich gefiltertes Grauwasser die Aufbereitungseinrichtung 17 erreicht.

Das mit Hilfe der Aufbereitungseinrichtung 17 aufbereitete Grauwasser kann für einen Waschgang direkt eingesetzt werden. Dazu ist die Aufbereitungseinrichtung 17 über ein erstes Zufuhrsystem 21, das insbesondere in Form einer Leitung ausgebildet sein kann, mit dem Ventil 9 verbunden, das auch die Frischwasserzufuhr regelt. Desweiteren kann das durch die Aufbereitungseinrichtung 17 aufbereitete Grauwasser für einen späteren Waschgang gespeichert werden. Dazu zweigt zur Rückführung des aufbereiteten Grauwassers in den Speicherbehälter 20 von dem ersten Zufuhrsystem 21 eine Rückführverbindung 18 zu dem Speicherbehälter 20 ab. Zur Umschaltung zwischen der Rückführung des aufbereiteten Grauwassers in den Speicherbehälter 20 und der Zuleitung des aufbereiteten Grauwassers in den Behandlungsraum 1 ist in dem ersten Zufuhrsystem 21 an dieser Abzweigung ein weiteres Ventil 25 integriert. Bei diesem weiteren Ventil 25 handelt es sich vorzugsweise um ein elektrisch steuerbares Ventil.

Das Ventil 9, die Heizeinrichtung 13, die Pumpe 15, die Fördereinrichtung 16, die Aufbereitungseinrichtung 17 und das weitere Ventil 25 können durch eine Programmsteuerung 12 in Abhängigkeit von einem Programmablaufplan gesteuert werden, der an ein Zeitprogramm und/oder an das Erreichen von gewissen Messwerten von Parametern wie Laugenniveau, Laugentemperatur, Drehzahl der Trommel 2 usw. innerhalb der Waschmaschine gebunden sein kann. Die Fördereinrichtung 16, die Aufbereitungseinrichtung 17 und das weitere Ventil 25 können aber auch unabhängig von einem Programmablaufplan eines Waschprogramms angesteuert werden, so dass das Grauwasser auch zu einem anderen Zeitpunkt, zu dem insbesondere kein Waschprogramm durchgeführt wird, aufbereitet werden kann.

Ist die Fördereinrichtung 16 in Betrieb, so wird Grauwasser von dem Speicherbehälter 20 zu der Aufbereitungseinrichtung 17 und durch diese hindurch gefördert. Beim Durchströmen der Aufbereitungseinrichtung 17 wird das Grauwasser durch diese aufbereitet. Im vorliegenden Ausführungsbeispiel werden durch den Filter 24 Schwebstoffe, wie insbesondere Flusen, aus dem Grauwasser heraus gefiltert. Durch die Desinfektionseinrichtung 23 werden Mikroorganismen in dem Grauwasser abgetötet. An die Aufbereitungseinrichtung 17 schließt sich das erste Zufuhrsystem 21 mit einem ersten Aufnahmevolumen 26 oberhalb der Aufbereitungseinrichtung 17 an, das durch das aufbereitete Grauwasser bei Betrieb der Fördereinrichtung 16 gefüllt wird. Das dieses erste Aufnahmevolumen 26 ausfüllende, aufbereitete Grauwasser bildet eine Wassersäule 27, deren Flüssigkeitsdruck durch die Fördereinrichtung 16 zur weiteren Förderung von Grauwasser überwunden werden muss. Dieses erste Aufnahmevolumen 26 und damit die Wassersäule 27 kann sich, wie im vorliegenden Ausführungsbeispiel gezeigt, direkt anschließend an die Aufbereitungseinrichtung 17 senkrecht nach oben erstrecken. Es ist aber auch möglich, dass bei einer Aufbereitungseinrichtung 17 mit einem Flüssigkeitsauslass, der nicht nach oben gerichtet ist, das erste Zufuhrsystem 21 einen Zwischenbogen aufweist, an den sich das erste Aufnahmevolumen 26 anschließt (nicht gezeigt).

Bei Abschalten der Fördereinrichtung 16 fließt das das erste Aufnahmevolumen 26 ausfüllende, aufbereitete Grauwasser aufgrund der Schwerkraft durch die Aufbereitungseinrichtung 17 zurück. Dabei werden in der Aufbereitungseinrichtung 17 abgelagerte Schwebstoffe, wie beispielsweise die an dem Filter 24 abgelagerten Flusen, abgelöst und zurückgespült. Je mehr Grauwasser durch die Aufbereitungseinrichtung 17 zurückfließt, desto besser ist dieser Reinigungsprozess. Damit das gesamte Grauwasser der Wassersäule 27 durch die Aufbereitungseinrichtung 17 zurückfließen kann, muss ein zweites Aufnahmevolumen 28 unterhalb der Aufbereitungseinrichtung 17 vorhanden sein, das mindestens dem ersten Aufnahmevolumen 26 entspricht. Im vorliegenden Ausführungsbeispiel bilden die Verbindungsleitung 22 zwischen Aufbereitungseinrichtung 17 und Speicherbehälter 20 zusammen mit der Fördereinrichtung 16 ein zweites Zufuhrsystem 29, das unterhalb der Aufbereitungseinrichtung 17 angeordnet ist. Desweiteren ist der Speicherbehälter 20 derart neben der Aufbereitungseinrichtung 17 angeordnet, dass zumindest ein Teilbereich 30 der Speicherbehälters 20 unterhalb der Aufbereitungseinrichtung 17 liegt. Das zweite Aufnahmevolumen 28 kann somit von dem zweiten Zufuhrsystem 29 und/oder dem Speicherbehälter 20 zur Verfügung gestellt werden. Dazu muss das zweite Zufuhrsystem 29 und/oder der Speicherbehälter 20 soweit entleert sein, dass das zweite Aufnahmevolumen 28 unterhalb der Aufbereitungseinrichtung 17 zur Aufnahme des gesamten Grauwassers der Wassersäule 27 zur Verfügung steht.

Das in das zweite Aufnahmevolumen 28 zurückgeflossene Grauwasser der Wassersäule 27 ist mit den von dem Filter 24 abgespülten Flusen bzw. sonstigen Ablagerungen verunreinigt. Zum Abführen dieses hoch konzentriert mit Flusen bzw. sonstigen Anlagerungen verunreinigten Grauwassers ist der Speicherbehälter 20 mit einem Abwassersystem 31 verbunden. Das Abwassersystem 31 greift in dem vorliegenden Ausführungsbeispiel im Bodenbereich des Speicherbehälters 20 an. Es sind aber auch andere Anordnungen möglich. Beispielsweise kann das Abwassersystem mit dem zweiten Zufuhrsystem 29 verbunden sein (nicht gezeigt).

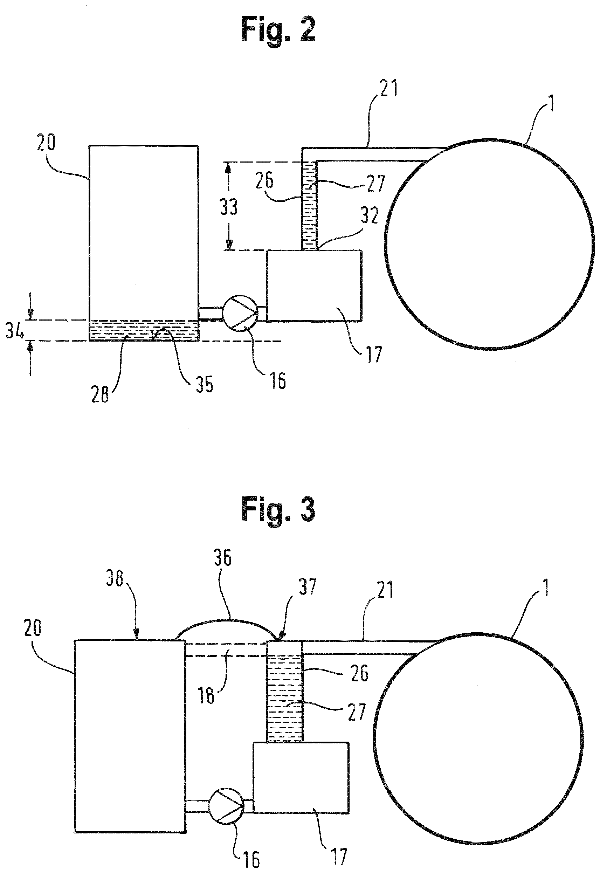

In Figur 2 ist eine abgewandelte Ausführungsform der Waschmaschine ohne eine Rückführverbindung in den Speicherbehälter 20 gezeigt. Die Aufbereitungseinheit 17 ist über das erste Zufuhrsystem 21 mit dem Behandlungsraum 1 flüssigkeitsleitend verbunden. Dabei besteht das erste Zufuhrsystem 21 lediglich aus einer Leitung, die in einem oberen Bereich in den Behandlungsraum 1 mündet. Das erste Zufuhrsystem 21 erstreckt sich von einem in einem oberen Bereich der Aufbereitungseinrichtung 17 liegenden Flüssigkeitsausgang 32 senkrecht bis zu einer ersten Höhe 33 nach oben, soweit es ein innerhalb der Waschmaschine, insbesondere durch den Behandlungsraum 1, vorgegebener Bauraum gestattet, um ein maximales erstes Aufnahmevolumen 26 für die Wassersäule 27 zur Verfügung zu stellen. Die Verbindung des ersten Zufuhrsystems 21 mit dem Behandlungsraum 1 ist dann nach dieser Höhe 33 in schematischer Form waagrecht eingezeichnet, um zu verdeutlichen, dass der zur Verfügung stehende Bauraum durch das erste Aufnahmevolumen 26 vollständig ausgeschöpft ist. Auf der anderen Seite ist die Aufbereitungseinrichtung 17 in einer zweiten Höhe 34 oberhalb eines durch den Speicherbehälter 20 vorgegebenen Bodenniveaus 35 angeordnet. Die zweite Höhe 34 ist derart gewählt, dass innerhalb des Speicherbehälters 20 von dem Bodenniveau 35 bis zu der zweiten Höhe 34 das zweite Aufnahmevolumen 28 definiert ist. Dieses zweite Aufnahmevolumen 28 ist an das erste Aufnahmevolumen 26 angepasst, so dass das zweite Aufnahmevolumen 28 minimal ist. Dies bedeutet, dass das zweite Aufnahmevolumen 28 genau zur Aufnahme der Flüssigkeitsmenge des in der Wassersäule 27 stehenden Grauwassers ausreicht.

In Figur 3 ist eine abgewandelte Ausführungsform der Waschmaschine gemäß Figur 1 mit einer Rückführverbindung 18 in den Speicherbehälter 20 und mit einer Belüftungsleitung 36 gezeigt. Die Belüftungsleitung 36 erstreckt sich von einem Scheitelpunkt 37 des ersten Zufuhrsystems 21 oberhalb des ersten Aufnahmevolumens 26 bis zu einem oberen Bereich 38 des Speicherbehälters 20. Auf diese Weise kann bei abgeschalteter Fördereinrichtung 16 eine Saugheberwirkung innerhalb des ersten Zufuhrsystems 21 vermieden werden. Damit ist sichergestellt, dass bei abgeschalteter Fördereinrichtung 16 die in dem ersten Aufnahmevolumen 26 stehende Wassersäule 27 durch die Aufbereitungseinrichtung 17 zurückfließt und nicht etwa durch einen bestehenden Unterdruck in den Behandlungsraum 1 gesaugt wird. Anstelle der Belüftungsleitung 36 kann auch ein Belüftungsventil (nicht gezeigt) vorgesehen sein. Insbesondere kann auch in das weitere Ventil 25 gemäß Figur 1 die zusätzliche Funktion des Belüftungsventils integriert sein.

Das Zufuhrsystem 21 weist in der Ausführungsform gemäß Figur 3 ein vergrößertes erstes Aufnahmevolumen 26 verglichen mit der Ausführungsform gemäß Figur 2 auf, indem der Durchmesser des ersten Aufnahmevolumens 26 vergrößert worden ist. Dadurch kann bei gleichbleibender Höhe des Bauraums das Flüssigkeitsvolumen der Wassersäule 27 vergrößert werden. Dadurch wird die Reinigungswirkung bei Zurückströmen der Wassersäule 27 durch die Aufbereitungseinrichtung 17 verbessert. Am oberen Ende der Wassersäule 27 kann von dem ersten Zufuhrsystem 21 auch eine Rückführverbindung 18 in den Speicherbehälter 20 abzweigen.

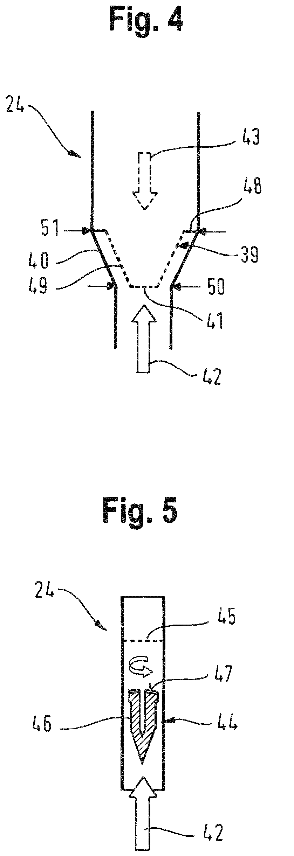

In Figur 4 ist eine spezielle Ausführungsform eines Filters 24 in Form eines Hutsiebes 39 gezeigt. Das Hutsieb 39 ist in einem konischen Rohrabschnitt 40 des zweiten Zufuhrsystems 29 angebracht. Das Hutsieb 39 weist eine Bodenfläche 41, einen Befestigungsring 48 und eine zwischen Bodenfläche 41 und Befestigungsring 48 verlaufende Mantelfläche 49 auf. Insbesondere ist das Hutsieb 39 derart in dem konischen Rohrabschnitt 40 angeordnet, dass die Bodenfläche 41 an der engsten Stelle 50 des konischen Rohrabschnitts 40 liegt und von der Strömung des Grauwassers senkrecht durchflossen wird. Der Befestigungsring 48 des Hutsiebs 39 ist an der weitesten Stelle 51 des konischen Rohrabschnitts 40 mit dem zweiten Zufuhrsystem 29 verbunden. Die Mantelfläche 49 des Hutsiebs 39 ist ebenfalls konisch ausgebildet und verläuft vorzugsweise parallel zu dem konischen Rohrabschnitt 40 des zweiten Zufuhrsystems 29. Dieser konische Rohrabschnitt 40 erweitert sich in Hauptflussrichtung 42 von einem geringeren Rohrdurchmesser zu einem größeren Rohrdurchmesser. Die Hauptflussrichtung 42 entspricht der Richtung, in die das Grauwasser bei eingeschalteter Fördereinrichtung 16 strömt. Bei abgeschalteter Fördereinrichtung 16 und zurückströmendem Grauwasser der Wassersäule 27 dreht sich die Fließrichtung in eine Rückspülrichtung 43 um. Flusen und andere Schwebstoffe des Grauwassers lagern sich bevorzugt an einer Bodenfläche 41 des Hutsiebs 39 an und werden von dort auch bevorzugt durch das zurückströmende Grauwasser entfernt.

In Figur 5 ist eine spezielle Ausführungsform eines Filters 24 mit einer Zerkleinerungseinrichtung 44 gezeigt. Dieser Filter 24 besteht aus einem Sieb 45 vor dem in Hauptflussrichtung 42 als Zerkleinerungseinrichtung 44 ein Schwebkörper 46 angeordnet ist. Dieser Schwebkörper 46 weist eine schneidende Oberfläche 47 auf. Diese schneidende Oberfläche 47 kann beispielsweise eine gezahnte Oberfläche sein. Der Schwebkörper 46 wird von dem Grauwasser bei Durchströmen des Filters 24 in Hauptflussrichtung 42 in Drehung versetzt und mit seiner schneidenden Oberfläche 47 gegen das Sieb 45 gedrückt. Dadurch werden an das Sieb 45 angelagerte Flusen und andere Schwebstoffe ständig von dem Sieb 45 abgeraspelt bzw. zerkleinert. Das Sieb 45 weist Öffnungen auf, die derart angepasst sind, dass Flusen oder andere Schwebstoffe, die soweit verkleinert sind, dass sie diese Öffnungen passieren können, auch nachfolgende Bauteile nicht verstopfen können. Bei in der Aufbereitungseinrichtung 17 integriertem Filter 24 kann das Sieb 45 auch durch Elektroden der Aufbereitungseinrichtung 17 gebildet sein.

### Bezugszeichenliste

- 1: Behandlungsraum
- 2: Wäschetrommel
- 3: Drehachse der Trommel
- 4: Wäschemitnehmer
- 5: Schöpfeinrichtungen
- 6: Waschlauge
- 7: Wäsche
- 8: Hauswassernetz
- 9: Ventil
- 10: Zuleitung
- 11: Einspülschale
- 12: Programmsteuerung
- 13: Heizeinrichtung
- 14: Antriebsmotor
- 15: Pumpe
- 16: Fördereinrichtung
- 17: Aufbereitungseinrichtung
- 18: Rückführverbindung
- 19: Drucksensor
- 20: Speicherbehälter
- 21: erstes Zufuhrsystem
- 22: Verbindungsleitung
- 23: Desinfektionseinheit
- 24: Filter
- 25: weiteres Ventil
- 26: erstes Aufnahmevolumen
- 27: Wassersäule
- 28: zweites Aufnahmevolumen
- 29: zweites Zufuhrsystem
- 30: Teilbereich des Speicherbehälters
- 31: Abwassersystem
- 32: Flüssigkeitsausgang
- 33: erste Höhe
- 34: zweite Höhe
- 35: Bodenniveau
- 36: Belüftungsleitung
- 37: Scheitelpunkt
- 38: oberer Bereich des Speicherbehälters
- 40: konischer Rohrabschnitt
- 41: Bodenfläche des Hutsiebs
- 42: Hauptflussrichtung
- 43: Rückspülrichtung
- 44: Zerkleinerungseinrichtung
- 45: Sieb
- 46: Schwebkörper
- 47: schneidende Oberfläche

## Patentansprüche

1. Wasserführendes Haushaltsgerät zur Reinigung von Waschgut mit einem Behandlungsraum (1) zur Aufnahme des Waschgutes, einem Speicherbehälter (20) zur Speicherung von Grauwasser, einer Aufbereitungseinrichtung (17) zur Reinigung und/oder Desinfektion des in dem Speicherbehälter (20) gespeicherten Grauwassers und einer Fördereinrichtung (16) zur Förderung des Grauwassers von dem Speicherbehälter (20) durch die Aufbereitungseinrichtung (17) hindurch, wobei die Aufbereitungseinrichtung (17) derart zwischen dem Speicherbehälter (20) und dem Behandlungsraum (1) angeordnet ist, dass sie mit dem Behandlungsraum (1) über ein erstes Zufuhrsystem (21) und mit dem Speicherbehälter (20) über ein zweites Zufuhrsystem (29) flüssigkeitsleitend verbunden ist, wobei das erste Zufuhrsystem (21) oberhalb der Aufbereitungseinrichtung (17) ein erstes Aufnahmevolumen (26) umfasst, das bei Betrieb der Fördereinrichtung (16) durch eine über der Aufbereitungseinrichtung (17) stehende Wassersäule (27) gefüllt ist, wobei das zweite Zufuhrsystem (29) und/oder der Speicherbehälter (20) unterhalb der Aufbereitungseinrichtung (17) ein zweites Aufnahmevolumen (28) umfasst, das mindestens dem ersten Aufnahmevolumen (26) entspricht und das zur Aufnahme eines der Wassersäule (27) entsprechenden Flüssigkeitsvolumens bei abgeschalteter Fördereinrichtung (16) ausgebildet ist, **dadurch gekennzeichnet, dass** nach Abschalten der Fördereinrichtung (16) ein Zurückströmen des in der Wassersäule (27) stehenden Volumens an aufbereiteten Grauwassers zur Reinigung der Aufbereitungseinrichtung (17) von angelagerten Schwebstoffen durch die Aufbereitungseinrichtung (17) ermöglicht ist.

2. Wasserführendes Haushaltsgerät nach Anspruch 1, **dadurch gekennzeichnet, dass** die Aufbereitungseinrichtung (17) in ihrer Höhenposition innerhalb des wasserführenden Haushaltsgerätes derart zwischen dem Speicherbehälter (20) und dem Behandlungsraum (1) angeordnet ist, dass die Wassersäule (27) maximal ist.

3. Wasserführendes Haushaltsgerät nach Anspruch 1 oder 2, **dadurch gekennzeichnet, dass** das erste Zufuhrsystem (21) innerhalb des wasserführenden Haushaltsgerätes derart zwischen der Aufbereitungseinrichtung (17) und dem Behandlungsraum (1) angeordnet ist, dass die Wassersäule (27) maximal ist.

4. Wasserführendes Haushaltsgerät nach einem der vorhergehenden Ansprüche, **dadurch gekennzeichnet, dass** die Aufbereitungseinrichtung (17) in ihrer Höhenposition innerhalb des wasserführenden Haushaltsgerätes derart zwischen dem Speicherbehälter (20) und dem Behandlungsraum (1) angeordnet ist, dass das zweite Aufnahmevolumen (28) minimal ist.

5. Wasserführendes Haushaltsgerät nach einem der vorhergehenden Ansprüche, **dadurch gekennzeichnet, dass** das zweite Zufuhrsystem (29) innerhalb des wasserführenden Haushaltsgerätes derart zwischen der Aufbereitungseinrichtung (17) und dem Speicherbehälter (20) angeordnet ist, dass das zweite Aufnahmevolumen (28) minimal ist.

6. Wasserführendes Haushaltsgerät nach einem der vorhergehenden Ansprüche, **dadurch gekennzeichnet, dass** das erste Zufuhrsystem (21), die Aufbereitungseinrichtung (17), der Speicherbehälter (20) und/oder das zweite Zufuhrsystem (29) derart zueinander angeordnet sind, dass bei Abschalten der Fördereinrichtung (16) ein vollständiges Zurücklaufen der Wassersäule (27) durch die Aufbereitungseinrichtung (17) hindurch gewährleistet ist.

7. Wasserführendes Haushaltsgerät nach einem der vorhergehenden Ansprüche, **dadurch gekennzeichnet, dass** eine Belüftung, des ersten Zufuhrsystems (21) vorgesehen ist.

8. Wasserführendes Haushaltsgerät nach Anspruch 7, **dadurch gekennzeichnet, dass** die Belüftung an einem Scheitelpunkt (37) des ersten Zufuhrsystems (21) vorgesehen ist.

9. Wasserführendes Haushaltsgerät nach Anspruch 7 oder 8, **dadurch gekennzeichnet, dass** das erste Zufuhrsystem (21) zur Belüftung ein Belüftungsventil und/oder eine Belüftungsleitung (36) zu dem Speicherbehälter (20) umfasst.

10. Wasserführendes Haushaltsgerät nach einem der vorhergehenden Ansprüche, **dadurch gekennzeichnet, dass** eine Rückführverbindung (18) zum Zurückführen von gereinigtem Grauwasser von dem ersten Zufuhrsystem (21) zu dem Speicherbehälter (20) vorgesehen ist.

11. Wasserführendes Haushaltsgerät nach Anspruch 10, **dadurch gekennzeichnet, dass** die Rückführverbindung (18) oberhalb des ersten Aufnahmevolumens (26) von dem ersten Zufuhrsystem (21) abzweigt, so dass auch bei Zurückführung von gereinigtem Grauwasser in den Speicherbehälter (20) das erste Aufnahmevolumen durch die Wassersäule (27) gefüllt ist.

12. Wasserführendes Haushaltsgerät nach einem der vorhergehenden Ansprüche, **dadurch gekennzeichnet, dass** sich das erste Zufuhrsystem (21) aus einem Bereich des ersten Aufnahmevolumens (26) und einem weiteren Bereich zusammensetzt, und dass das erste Zufuhrsystem (21) zumindest in dem Bereich des ersten Aufnahmevolumens (26) einen Leitungsdurchmesser aufweist, der an einen Durchflussbereich der Aufbereitungseinrichtung (17) angepasst ist.

13. Wasserführendes Haushaltsgerät nach Anspruch 12, **dadurch gekennzeichnet, dass** das erste Zufuhrsystem (21) in dem Bereich des ersten Aufnahmevolumens (26) einen größeren Leitungsdurchmesser aufweist als in dem weiteren Bereich.

14. Wasserführendes Haushaltsgerät nach einem der vorhergehenden Ansprüche, **dadurch gekennzeichnet, dass** ein Filter (24) zur Filterung von Schwebstoffen aus dem Grauwasser vorgesehen ist.

15. Wasserführendes Haushaltsgerät nach Anspruch 14, **dadurch gekennzeichnet, dass** die Aufbereitungseinrichtung (17) den Filter (24) umfasst.

16. Wasserführendes Haushaltsgerät nach Anspruch 15, **dadurch gekennzeichnet, dass** der Filter (24) durch zumindest ein Funktionsteil der Aufbereitungseinrichtung (17) gebildet ist.

17. Wasserführendes Haushaltsgerät nach Anspruch 14, **dadurch gekennzeichnet, dass** der Filter (24) zwischen dem Speicherbehälter (20) und der Aufbereitungseinrichtung (17) angeordnet ist.

18. Wasserführendes Haushaltsgerät nach einem der Ansprüche 14 bis 17, **dadurch gekennzeichnet, dass** der Filter (24) als Sieb, insbesondere als Hutsieb (39), ausgebildet ist.

19. Wasserführendes Haushaltsgerät nach Anspruch 18, **dadurch gekennzeichnet, dass** das Sieb in einem konischen Abschnitt des zweiten Zufuhrsystems (29) angeordnet ist.

20. Wasserführendes Haushaltsgerät nach einem der Ansprüche 14 bis 19, **dadurch gekennzeichnet, dass** dem Filter (24) eine Zerkleinerungseinrichtung (44) zur Zerkleinerung der aus dem Grauwasser herausgefilterten Schwebstoffe zugeordnet ist.

21. Wasserführendes Haushaltsgerät nach Anspruch 20, **dadurch gekennzeichnet, dass** die Zerkleinerungseinrichtung (44) derart ausgebildet ist, dass sie durch eine Strömung des Grauwassers, insbesondere in Hauptflussrichtung (42), in Gang gesetzt wird.

22. Wasserführendes Haushaltsgerät nach Anspruch 21, **dadurch gekennzeichnet, dass** die Zerkleinerungseinrichtung (44) ein Schwebkörper (46) ist, insbesondere mit einer schneidenden Oberfläche (47), der durch die Strömung des Grauwassers in Rotation versetzt wird.

23. Wasserführendes Haushaltsgerät nach Anspruch 21 oder 22, **dadurch gekennzeichnet, dass** der Schwebkörper (46) an seiner Oberfläche Leitstrukturen aufweist, durch die die Strömung des Grauwassers ein Drehmoment erzeugt.

24. Wasserführendes Haushaltsgerät nach Anspruch 22 oder 23, **dadurch gekennzeichnet, dass** die schneidende Oberfläche (47) eine gezahnte Oberfläche ist.

25. Wasserführendes Haushaltsgerät nach einem der Ansprüche 22 bis 24, **dadurch gekennzeichnet, dass** der Filter (24) ein Sieb (45) umfasst, und dass der Schwebkörper (46) derart ausgebildet ist, dass er durch die Strömung des Grauwassers mit seiner schneidenden Oberfläche (47) gegen das Sieb (45) gedrückt wird.

26. Wasserführendes Haushaltsgerät nach einem der Ansprüche 20 bis 25, **dadurch gekennzeichnet, dass** der Filter (24) in einem im Wesentlichen senkrecht angeordneten Leitungsabschnitt der zweiten Zufuhrsystems (29) angeordnet ist.

27. Wasserführendes Haushaltsgerät nach einem der vorhergehenden Ansprüche, **dadurch gekennzeichnet, dass** das zweite Zufuhrsystem (29) und/oder der Speicherbehälter (20) mit einem Abwassersystem (31) zum Abführen von zumindest des in dem zweiten Aufnahmevolumen (28) aufgenommen Flüssigkeitsvolumens verbunden ist.

28. Wasserführendes Haushaltsgerät nach einem der vorhergehenden Ansprüche, **dadurch gekennzeichnet, dass** das wasserführende Haushaltsgerät eine Waschmaschine, ein Waschtrockner oder eine Geschirrspülmaschine ist.

29. Verfahren zum Betreiben eines wasserführenden Haushaltsgerätes nach einem der vorhergehenden Ansprüche, bei dem das in dem Speicherbehälter (20) gespeicherte Grauwasser zur Aufbereitung bei eingeschalteter Fördereinrichtung (16) zu der Aufbereitungseinrichtung (17) befördert wird, und bei dem nach Abschalten der Fördereinrichtung (16) das in der Wassersäule (27) stehende Volumen an aufbereiteten Grauwassers zur Reinigung der Aufbereitungseinrichtung (17) von angelagerten Schwebstoffen durch die Aufbereitungseinrichtung (17) zurückströmt.

30. Verfahren nach dem vorhergehenden Anspruch, **dadurch gekennzeichnet, dass** die Schwebstoffe in dem Grauwasser des zweiten Aufnahmevolumens (28) konzentriert werden, und dass das Grauwasser des zweiten Aufnahmevolumens (28) über ein Abwassersystem (31) entsorgt wird.

31. Verfahren nach Anspruch 29 oder 30, **dadurch gekennzeichnet, dass** die Fördereinrichtung (16) mindestens solange betrieben wird, bis das zweite Zufuhrsystem (29) und/oder der Speicherbehälter (20) soweit entleert sind, dass unterhalb der Aufbereitungseinrichtung (17) das zweite Aufnahmevolumen (28) zur Aufnahme von zurückströmenden Grauwasser aus dem ersten Aufnahmevolumen (26) vollständig zur Verfügung steht.

## Claims

1. Water-conducting household appliance for cleaning items to be washed having a treatment compartment (1) for receiving the items to be washed, a storage container (20) for storing grey water, a treatment device (17) for cleaning and/or disinfecting the grey water stored in the storage container (20) and a conveyor device (16) for conveying the grey water from the storage container (20) through the treatment device (17), wherein the treatment device (17) is arranged between the storage container (20) and the treatment compartment (1) such that it is connected in a fluid-conducting manner with the treatment compartment (1) by way of a first supply system (21) and with the storage container (20) by way of a second supply system (29), wherein the first supply system (21) comprises a first receiving volume (26) above the treatment device (17), which is filled by a water column (27) present above the treatment device (17) during operation of the conveyor device (16), wherein the second supply system (29) and/or the storage container (20) comprises a second receiving volume (28), below the treatment device (17), which corresponds at least to the first receiving volume (26) and which is embodied to receive a liquid volume corresponding to the water column (27) when the conveyor device (16) is switched off, **characterised in that** after the conveyor device (16) is switched off, a back-flow of the volume of treated grey water present in the water column (27) through the treatment device (17) is made possible in order to clean the treatment device (17) of the accumulated suspended matter.

2. Water-conducting household appliance according to claim 1, **characterised in that** the treatment device (17) is arranged in its height position within the water-conducting household appliance between the storage container (20) and the treatment compartment (1) so as to maximise the water column (27).

3. Water-conducting household appliance according to claim 1 or 2, **characterised in that** the first supply system (21) within the water-conducting household appliance is arranged between the treatment device (17) and the treatment compartment (1) so as to maximise the water column (27).

4. Water-conducting household appliance according to one of the preceding claims, **characterised in that** the treatment device (17) is arranged in its height position within the water-conducting household appliance between the storage container (20) and the treatment compartment (1) so as to minimise the second receiving volume (28).

5. Water-conducting household appliance according to one of the preceding claims, **characterised in that** the second supply system (29) is arranged within the water-conducting household appliance between the treatment device (17) and the storage container (20) so as to minimise the second receiving volume (28).

6. Water-conducting household appliance according to one of the preceding claims, **characterised in that** the first supply system (21), the treatment device (17), the storage container (20) and/or the second supply system (29) are arranged with respect to one another such that when the conveyor device (16) is switched off, a complete back-flow of the water column (27) through the treatment device (17) is ensured.

7. Water-conducting household appliance according to one of the preceding claims, **characterised in that** provision is made to ventilate the first supply system (21).

8. Water-conducting household appliance according to claim 7, **characterised in that** the ventilation is provided at a peak (37) of the first supply system (21).

9. Water-conducting household appliance according to claim 7 or 8, **characterised in that** for ventilation purposes the first supply system (21) comprises a ventilation valve and/or a ventilation line (36) to the storage container (20).

10. Water-conducting household appliance according to one of the preceding claims, **characterised in that** a feedback link (18) is provided to feed back cleaned grey water from the first supply system (21) to the storage container (20).

11. Water-conducting household appliance according to claim 10, **characterised in that** the feedback link (18) branches from the first supply system (21) above the first receiving volume (26) so that the first receiving volume is filled by the water column (27) even when cleaned grey water is fed back into the storage container (20).

12. Water-conducting household appliance according to one of the preceding claims, **characterised in that** the first supply system (21) is composed of an area of the first receiving volume (26) and a further area and that at least in the area of the first receiving volume (26) the first supply system (21) has a line diameter which is adjusted to a flow range of the treatment device (17).

13. Water-conducting household appliance according to claim 12, **characterised in that** the first supply system (21) has a larger line diameter in the area of the first receiving volume (26) than in the further area.

14. Water-conducting household appliance according to one of the preceding claims, **characterised in that** a filter (24) is provided to filter suspended matter from the grey water.

15. Water-conducting household appliance according to claim 14, **characterised in that** the treatment device (17) comprises the filter (24).

16. Water-conducting household appliance according to claim 15, **characterised in that** the filter (24) is formed by at least one functional part of the treatment device (17).

17. Water-conducting household appliance according to claim 14, **characterised in that** the filter (24) is arranged between the storage container (20) and the treatment device (17).

18. Water-conducting household appliance according to one of claims 14 to 17, **characterised in that** the filter (24) is embodied as a strainer, in particular as a suction strainer (39).

19. Water-conducting household appliance according to claim 18, **characterised in that** the strainer is arranged in a conical section of the second supply system (29).

20. Water-conducting household appliance according to one of claims 14 to 19, **characterised in that** a maceration device (44) for macerating the suspended matter filtered out of the grey water is assigned to the filter (24).

21. Water-conducting household appliance according to claim 20, **characterised in that** the maceration device (44) is embodied such that it is set into operation by a flow of grey water, in particular in the main flow direction (42).

22. Water-conducting household appliance according to claim 21, **characterised in that** the maceration device (44) is a float (46), in particular with a cutting surface (47) which is made to rotate by means of the flow of grey water.

23. Water-conducting household appliance according to claim 21 or 22, **characterised in that** the float (46) has channelling structures on its surface, by means of which the flow of grey water produces a torque.

24. Water-conducting household appliance according to claim 22 or 23, **characterised in that** the cutting surface (47) is a toothed surface.

25. Water-conducting household appliance according to one of claims 22 to 24, **characterised in that** the filter (24) comprises a strainer (45) and that the float (46) is embodied such that it is pressed against the strainer (45) with its cutting surface (47) by means of the flow of grey water.

26. Water-conducting household appliance according to one of claims 20 to 25, **characterised in that** the filter (24) is arranged in a line section of the second supply system (29) which is arranged essentially vertically.

27. Water-conducting household appliance according to one of the preceding claims, **characterised in that** the second supply system (29) and/or the storage container (20) is connected to a waste water system (31) for purging at least the liquid volume received in the second receiving volume (28).

28. Water-conducting household appliance according to one of the preceding claims, **characterised in that** the water-conducting household appliance is a washing machine, a washer-dryer or a dishwasher.

29. Method for operating a water-conducting household appliance according to one of the preceding claims, in which the grey water stored in the storage container (20) is conveyed to the treatment device (17) for treatment when the conveyor device (16) is switched on, and in which after the conveyor device (16) is switched off the volume of prepared grey water present in the water column (27) flows back through the treatment device (17) to clean the treatment device (17) of accumulated suspended matter.

30. Method according to the preceding claim, **characterised in that** the suspended matter is concentrated in the grey water of the second receiving volume (28) and that the grey water of the second receiving volume (28) is purged by way of a waste water system (31).

31. Method according to claim 29 or 30, **characterised in that** the conveyor device (16) is operated at least until the second supply system (29) and/or the storage container (20) are emptied until the second receiving volume (28) for receiving backflowing grey water from the first receiving volume (26) is fully available below the treatment device (17).

## Revendications

1. Appareil ménager à circulation d'eau destiné à nettoyer des produits à laver, comprenant un espace de traitement (1) destiné à loger les produits à laver, un réservoir de stockage (20) destiné à stocker les eaux grises, un dispositif de traitement (17) destiné à nettoyer et/ou désinfecter les eaux grises stockées dans le réservoir de stockage (20), et un dispositif de transport (16) destiné à transporter les eaux grises du réservoir de stockage (20) à travers le dispositif de traitement (17), le dispositif de traitement (17) étant disposé entre le réservoir de stockage (20) et l'espace de traitement (1) de manière à ce qu'il soit relié, de façon permettant l'écoulement de liquide, à l'espace de traitement (1) par l'intermédiaire d'un premier système d'alimentation (21) et au réservoir de stockage (20) par l'intermédiaire d'un deuxième système d'alimentation (29), le premier système d'alimentation (21) au-dessus du dispositif de traitement (17) comprenant un premier volume de réception (26) qui, lors du fonctionnement du dispositif de transport (16), est rempli à travers une colonne d'eau (27) se trouvant au-dessus du dispositif de traitement (17), le deuxième système d'alimentation (29) et/ou le réservoir de stockage (20) en dessous du dispositif de traitement (17) comprenant un deuxième volume de réception (28) qui correspond au moins au premier volume de réception (26) et est réalisé pour recevoir un volume de liquide correspondant à la colonne d'eau (27) lorsque le dispositif de transport (16) est arrêté, **caractérisé en ce qu'**après l'arrêt du dispositif de transport (16), un écoulement en retour du volume en eaux grises traitées se trouvant dans la colonne d'eau (27) est rendu possible à travers le dispositif de traitement (17) pour le nettoyage du dispositif de traitement (17) par élimination de matières en suspension accumulées.

2. Appareil ménager à circulation d'eau selon la revendication 1, **caractérisé en ce que** le dispositif de traitement (17), dans sa position en hauteur à l'intérieur de l'appareil ménager à circulation d'eau, est disposé entre le réservoir de stockage (20) et l'espace de traitement (1) de manière à ce que la colonne d'eau (27) soit maximale.

3. Appareil ménager à circulation d'eau selon la revendication 1 ou 2, **caractérisé en ce que** le premier système d'alimentation (21) à l'intérieur de l'appareil ménager à circulation d'eau, est disposé entre le dispositif de traitement (17) et l'espace de traitement (1) de manière à ce que la colonne d'eau (27) soit maximale.

4. Appareil ménager à circulation d'eau selon l'une quelconque des revendications précédentes, **caractérisé en ce que** le dispositif de traitement (17), dans sa position en hauteur à l'intérieur de l'appareil ménager à circulation d'eau, est disposé entre le réservoir de stockage (20) et l'espace de traitement (1) de manière à ce que le deuxième volume de réception (28) soit minimal.

5. Appareil ménager à circulation d'eau selon l'une quelconque des revendications précédentes, **caractérisé en ce que** le deuxième système d'alimentation (29) à l'intérieur de l'appareil ménager à circulation d'eau est disposé entre le dispositif de traitement (17) et le réservoir de stockage (20) de manière à ce que le deuxième volume de réception (28) soit minimal.

6. Appareil ménager à circulation d'eau selon l'une quelconque des revendications précédentes, **caractérisé en ce que** le premier système d'alimentation (21), le dispositif de traitement (17), le réservoir de stockage (20) et/ou le deuxième système d'alimentation (29) sont disposés l'un par rapport à l'autre de manière à ce que lors de l'arrêt du dispositif de transport (16), un retour complet de la colonne d'eau (27) à travers le dispositif de traitement (17) soit garanti.

7. Appareil ménager à circulation d'eau selon l'une quelconque des revendications précédentes, **caractérisé en ce qu'**une aération du premier système d'alimentation (21) est ménagée.

8. Appareil ménager à circulation d'eau selon la revendication 7, **caractérisé en ce que** l'aération est ménagée sur un point culminant (37) du premier système d'alimentation (21).

9. Appareil ménager à circulation d'eau selon la revendication 7 ou 8, **caractérisé en ce que** le premier système d'alimentation (21) comprend pour l'aération une vanne d'aération et/ou une conduite d'aération (36) vers le réservoir de stockage (20).

10. Appareil ménager à circulation d'eau selon l'une quelconque des revendications précédentes, **caractérisé en ce qu'**une liaison de retour (18) destinée à ramener les eaux grises épurées du premier système d'alimentation (21) vers le réservoir de stockage (20) est ménagée.

11. Appareil ménager à circulation d'eau selon la revendication 10, **caractérisé en ce que** la liaison de retour (18) au-dessus du premier volume de réception (26) bifurque du premier système d'alimentation (21) de sorte que même lors du retour des eaux grises épurées dans le réservoir de stockage (20), le premier volume de réception est rempli à travers la colonne d'eau (27).

12. Appareil ménager à circulation d'eau selon l'une quelconque des revendications précédentes, **caractérisé en ce que** le premier système d'alimentation (21) est constitué d'une partie du premier volume de réception (26) et d'une partie supplémentaire, et **en ce que** le premier système d'alimentation (21) présente au moins dans la partie du premier volume de réception (26) un diamètre de conduite qui est adapté à une zone d'écoulement du dispositif de traitement (17).

13. Appareil ménager à circulation d'eau selon la revendication 12, **caractérisé en ce que** le premier système d'alimentation (21) dans la partie du premier volume de réception (26) présente un diamètre de conduite plus grand que dans la partie supplémentaire.

14. Appareil ménager à circulation d'eau selon l'une quelconque des revendications précédentes, **caractérisé en ce qu'**un filtre (24) est ménagé pour filtrer les matières en suspension dans les eaux grises.

15. Appareil ménager à circulation d'eau selon la revendication 14, **caractérisé en ce que** le dispositif de traitement (17) comprend le filtre (24).

16. Appareil ménager à circulation d'eau selon la revendication 15, **caractérisé en ce que** le filtre (24) est formé par au moins une pièce fonctionnelle du dispositif de traitement (17).

17. Appareil ménager à circulation d'eau selon la revendication 14, **caractérisé en ce que** le filtre (24) est disposé entre le réservoir de stockage (20) et le dispositif de traitement (17)

18. Appareil ménager à circulation d'eau selon l'une quelconque des revendications 14 à 17, **caractérisé en ce que** le filtre (24) est réalisé comme tamis, notamment tamis à chapeau (39).

19. Appareil ménager à circulation d'eau selon la revendication 18, **caractérisé en ce que** le tamis est disposé dans une section conique du deuxième système d'alimentation (29).

20. Appareil ménager à circulation d'eau selon l'une quelconque des revendications 14 à 19 **caractérisé en ce qu'**un dispositif de broyage (44) destiné à broyer les matières en suspension filtrées des eaux grises est associé au filtre (24).

21. Appareil ménager à circulation d'eau selon la revendication 20, **caractérisé en ce que** le dispositif de broyage (44) est réalisé de manière à ce qu'il soit mis en marche par un courant des eaux grises, notamment en direction principale d'écoulement (42).

22. Appareil ménager à circulation d'eau selon la revendication 21, **caractérisé en ce que** le dispositif de broyage (44) est un corps flottant (46), notamment doté d'une surface coupante (47), lequel est mis en rotation par le courant des eaux grises.

23. Appareil ménager à circulation d'eau selon la revendication 21 ou 22, **caractérisé en ce que** le corps flottant (46) présente des structures de guidage sur sa surface, au moyen desquelles le courant des eaux grises génère un couple.

24. Appareil ménager à circulation d'eau selon la revendication 22 ou 23, **caractérisé en ce que** la surface coupante (47) est une surface dentée.

25. Appareil ménager à circulation d'eau selon l'une quelconque des revendications 22 à 24, **caractérisé en ce que** le filtre (24) comprend un tamis (45) et **en ce que** le corps flottant (46) est réalisé de manière à ce qu'il soit pressé contre le tamis (45) avec sa surface coupante (47) par le courant des eaux grises.

26. Appareil ménager à circulation d'eau selon l'une quelconque des revendications 20 à 25 **caractérisé en ce que** le filtre (24) est disposé dans une section de conduite essentiellement verticale du deuxième système d'alimentation (29).

27. Appareil ménager à circulation d'eau selon l'une quelconque des revendications précédentes, **caractérisé en ce que** le deuxième système d'alimentation (29) et/ou le réservoir de stockage (20) sont reliés à un système d'évacuation des eaux usées (31) destiné à évacuer au moins le volume de liquide réceptionné dans le deuxième volume de réception (28).

28. Appareil ménager à circulation d'eau selon l'une quelconque des revendications précédentes, **caractérisé en ce que** l'appareil ménager à circulation d'eau est un lave-linge, un lave-linge séchant ou un lave-vaisselle.

29. Procédé de fonctionnement d'un appareil ménager à circulation d'eau selon l'une quelconque des revendications précédentes, dans lequel les eaux grises stockées dans le réservoir de stockage (20) sont transportées vers le dispositif de traitement (17) pour le traitement lorsque le dispositif de transport (16) est en fonction, et dans lequel, après l'arrêt du dispositif de transport (16), le volume en eaux grises épurées se trouvant dans la colonne d'eau (27) revient à travers le dispositif de traitement (17) pour nettoyer le dispositif de traitement (17) par élimination des matières en suspension accumulées.

30. Procédé selon la revendication précédente, **caractérisé en ce que** les matières en suspension dans les eaux grises du deuxième volume de réception (28) sont concentrées, et **en ce que** les eaux grises du deuxième volume de réception (28) sont évacuées par l'intermédiaire d'un système d'évacuation des eaux usées (31).

31. Procédé selon la revendication 29 ou 30, **caractérisé en ce que** le dispositif de transport (16) fonctionne au moins jusqu'à ce que le deuxième système d'alimentation (29) et/ou le réservoir de stockage (20) soient vidés, de manière à ce qu'en dessous du dispositif de traitement (17) le deuxième volume de réception (28) soit entièrement disponible pour réceptionner les eaux grises revenant du premier volume de réception (26).
